# EUROPÄISCHE PATENTSCHRIFT

(11) **EP 1 170 934 B1**
(45) Veröffentlichungstag und Bekanntmachung des Hinweises auf die Patenterteilung: **14.06.2006**
(21) Anmeldenummer: 01115023.2
(22) Anmeldetag: 20.06.2001
(51) Int. Cl.: H04N 7/14, H04N 7/52, H04M 3/56

(54) **Verfahren und Multimedia-Kommunikationseinrichtung zur Kommunikation zwischen Endgeräten mit unterschiedlichen Multimediafähigkeiten**
Method and system for the communication between terminals having different multimedia capabilities
Méthode et système pour la communication entre des terminaux avec des aptitudes multimédia différents

(30) Priorität: 05.07.2000 DE 10032521
(43) Veröffentlichungstag der Anmeldung: 09.01.2002
(73) Patentinhaber: SIEMENS AKTIENGESELLSCHAFT, 80333 München (DE)
(72) Erfinder: Leimkötter, Ulrich, 45889 Gelsenkirchen (DE)

(56) Entgegenhaltungen:
- EP-A- 0 741 484
- WO-A-99/43164
- US-A- 5 450 123
- US-A- 5 896 165
- "H.245: Control Protocol for multimedia communication" (ANONYMOUS), Mai 1999 (1999-05), XP002199601

## Beschreibung

In zeitgemäßen Kommunikationssystemen werden in zunehmendem Maße multimediafähige Endgeräte eingesetzt. Derartige Endgeräte unterstützen jeweils einen oder mehrere unterschiedliche Multimediadienste, die eine Multimedia-Kommunikation über unterschiedliche Medienkanäle erlauben. Als Beispiel für derartige Multimediadienste seien an dieser Stelle Sprachdienste, Audiodienste, Videodienste, Informationsdienste, Datendienste und Programmkommunikationsdienste genannt. Die unterschiedlichen Multimediadienste werden in der Regel mit Hilfe von spezifischen Kommunikationsprotokollen realisiert.

Um einen vorgegebenen Multimediadienst im Rahmen einer Kommunikation zwischen zwei Endgeräten kommunikationsspezifisch zu nutzen, ist es häufig erforderlich, dass beide Endgeräte den betreffenden Multimediadienst unterstützen. Bei einer Kommunikation zwischen Endgeräten, deren Multimediafähigkeiten sich unterscheiden, werden somit eine oder mehrere der Multimediafähigkeiten der Endgeräte nicht kommunikationsspezifisch genutzt.

Aus der Patentschrift US 5450123 ist ein Verfahren zur Kommunikation zwischen unterschiedliche Multimediafähigkeiten aufweisenden Kommunikationseinrichtungen bekannt. Hierbei ist jedoch nicht vorgesehen, die Multimediafähigkeiten der Kommunikationseinrichtungen leistungsmerkmalspezifisch zu nutzen.

Es ist Aufgabe der vorliegenden Erfindung ein Verfahren und eine Multimedia-Kommunikationseinrichtung zur Kommunikation zwischen Endgeräten mit unterschiedlichen Multimediafähigkeiten anzugeben, die eine verbesserte Nutzung der Multimediafähigkeiten der Endgeräte erlauben.

Gelöst wird diese Aufgabe durch ein Verfahren gemäß Patentanspruch 1 und eine Multimedia-Kommunikationseinrichtung gemäß Patentanspruch 6.

Die Erfindung erlaubt es, bei Verbindungen zwischen Endgeräten mit unterschiedlichen Multimediafähigkeiten Multimediadienste, die von einem ersten Endgerät angeboten werden auch dann kommunikationsspezifisch zu nutzen, wenn diese Multimediadienste von einem Verbindungspartner des ersten Endgerätes nicht bedient werden. Anstelle einer ersatzlosen Terminierung von angebotenen aber nicht bedienten Multimediadiensten werden diese erfindungsgemäß mit gespeicherten, multimediadienstspezifischen Multimediadaten gespeist, die zu dem den betreffenden Multimediadienst anbietenden Endgerät übertragen werden. Die gespeicherten und bei Bedarf zu übertragenden Multimediadaten sind im Prinzip beliebig vorgebbar und erlauben somit eine individuell konfigurierbare bzw. programmierbare Reaktion gegenüber Endgeräten mit ganz unterschiedlichen Multimediafähigkeiten. Auf diese Weise kann z.B. für einen Benuzter, der häufig mit Endgeräten unterschiedlicher Multimediafähigkeiten verbunden wird, ein einheitliches, konfigurierbares Auftreten im Rahmen der unterschiedlichen, von seinen Kommunikationspartnern unterstützten Multimediadienste erreicht werden.

Zum Steuern von Leistungsmerkmalen ist eine jeweils für unterschiedliche Leistungsmerkmale vorgegebene, leistungsmerkmalindividuell konfigurierbare Reaktionsmatrix vorgesehen, in der differenziert sowohl nach potentiellen Multimediafähigkeiten eines anrufenden Endgerätes als auch nach potentiellen Multimediafähigkeiten eines von diesem angerufenen Endgerätes jeweils eine Steuerinformation zum Steuern des betreffenden Leistungsmerkmals hinterlegt ist.

Vorteilhafte Ausführungsformen und Weiterbildungen der Erfindung sind in den abhängigen Ansprüchen angegeben.

Gemäß einer vorteilhaften Ausführungsform der Erfindung können benutzerspezifische Multimediadaten gespeichert sein, aus denen die zum ersten Endgerät zu übermittelnden Multimediadaten abhängig von einem ermittelten Benutzer ausgewählt werden. So können beispielsweise für unterschiedliche Benutzer jeweils unterschiedliche Videodaten mit einem Standbild des betreffenden Benutzers gespeichert sein. Jedem anrufenden videofähigen Endgerät wird dann ein gespeichertes Standbild des jeweils angerufenen Benutzers übermittelt.

Weiterhin können auch leistungsmerkmalspezifische und/oder endgerätespezifische und/oder gruppenspezifische Multimediadaten gespeichert sein. In diesen Fällen können die zum ersten Endgerät zu übermittelnden Multimediadaten abhängig von einem aktivierten Leistungsmerkmal bzw. einer Identität eines Endgerätes bzw. einer Zugehörigkeit eines Endgerätes zu einer Endgerätegruppe ausgewählt werden.

Die Auswahl und die Übermittlung der Multimediadaten kann besonders einfach mittels einer benutzerindividuell vorgegebenen Reaktionsmatrix realisiert werden. In einer solchen Reaktionsmatrix sind jeweils differenziert nach potentiellen Multimediafähigkeiten der kommunizierenden Endgeräte Steuerinformationen zum Steuern der Auswahl und Übertragung der Multimediadaten hinterlegt.

Ein Ausführungsbeispiel der Erfindung wird nachfolgend anhand der Zeichnung näher erläutert.

Dabei zeigen jeweils in schematischer Darstellung
- FIG 1: eine Multimedia-Kommunikationseinrichtung mit einem direkt angekoppelten Endgerät und einem über ein Kommunikationsnetz angekoppelten Endgerät und
- FIG 2: einen Satz benutzerindividueller Reaktionsmatrixen.

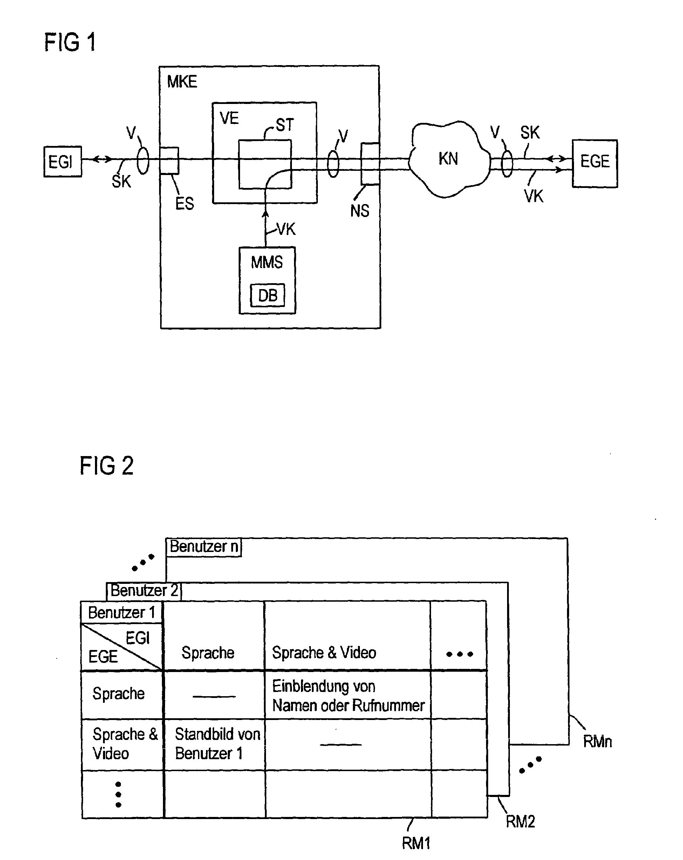

In FIG 1 ist eine über eine Netzschnittstelle NS an ein Kommunikationsnetz KN angekoppelte Multimedia-Kommunikationseinrichtung MKE, z.B. eine private Nebenstellenanlage, schematisch dargestellt. Ein sprachkommunikationsfähiges Endgerät EGI ist über eine Endgeräteschnittstelle ES der Multimedia-Kommunikationseinrichtung MKE an diese angekoppelt. Als direkt an die Multimediaeinrichtung MKE gekoppeltes Endgerät wird das Endgerät EGI im Folgenden auch als internes Endgerät bezeichnet. Das interne Endgerät EGI kann auch als schnurloses oder mobiles Endgerät realisiert sein. In diesem Fall wird durch die Endgeräteschnittstelle ES eine Luftschnittstelle implementiert.

Weiterhin ist ein zur Sprach- und Videokommunikation fähiges, externes Endgerät EGE an das Kommunikationsnetz KN angeschlossen. Zwischen dem externen Endgerät EGE und dem internen Endgerät EGI ist über das Kommunikationsnetz KN und die Multimedia-Kommunikationseinrichtung MKE eine Verbindung V aufgebaut.

Die Multimedia-Kommunikationseinrichtung MKE enthält als weitere Funktionskomponenten eine Vermittlungseinrichtung VE mit einer Steuerung ST sowie einen Multimediaserver MMS mit einer Datenbank DB. Im Multimediaserver MMS sind eine Vielzahl von Multimediaprotokollen zur Bereitstellung einer Vielzahl von Multimediadiensten, wie z.B. Sprachdiensten, Audiodiensten, Videodiensten, Informationsdiensten, Datendiensten oder Steuerdiensten, implementiert. In der Datenbank DB des Multimediaservers MMS sind entsprechend für jeden von diesem unterstützten Multimediadienst multimediadienstspezifische Multimediadaten gespeichert, die individuell vorgebbar sind. Anstelle der einzelnen, internen Datenbank DB könnten auch mehrere multimediadienstspezifische Datenbanken, externe Datenbanken oder andere Datenquellen vorgesehen sein.

Jedem unterstützten Multimediadienst bzw. Multimediaprotokoll sind ein oder mehrere Multimediakanäle zur Übertragung der jeweils spezifischen Multimediadaten zugeordnet. Im vorliegenden Ausführungsbeispiel ist im Rahmen der Verbindung V ein durch die Vermittlungseinrichtung VE und die Steuerung ST vermittelter Sprachkanal SK zum bidirektionalen Transport von Sprachdaten zwischen den Endgeräten EGI und EGE aufgebaut. Weiterhin ist ein Videokanal VK aufgebaut, der ausgehend vom Multimediaserver MMS durch die Vermittlungseinrichtung VE und die Steuerung ST der Verbindung V zugeordnet und über das Kommunikationsnetz KN zum Endgerät EGE vermittelt wird. Über den Videokanal VK werden in der Datenbank DB gespeicherte Videodaten zur Anzeige am Endgerät EGE übertragen. Durch die Zuordnung des Videokanals VK zur Verbindung V wird gegenüber dem Endgerät EGE fingiert, dass die übertragenen Videodaten vom Endgerät EGI stammen.

Es sei an dieser Stelle angemerkt, dass die in FIG 1 dargestellte Verbindung V zwischen einem sprachkommunikationsfähigen Endgerät EGI und einem sprach- und videokommunikationsfähigen Endgerät EGE lediglich als beispielhaft zu verstehen ist. Im Prinzip ist die vorliegende Erfindung weitgehend unabhängig von der Anzahl der kommunizierenden Endgeräte und von deren speziellen Multimediafähigkeiten. So läßt sich die Erfindung z.B. auch auf Konferenzschaltungen zwischen drei oder mehr Endgeräten mit beliebigen unterschiedlichen Multimediafähigkeiten sinngemäß anwenden. Als Endgeräte können ferner beliebige Kommunikationsendgeräte, wie z.B. Festnetzendgeräte, Schnurlosendgeräte, mobile Endgeräte und/oder Personalcomputer, genutzt werden.

In FIG 2 ist ein Satz benutzerindividueller Reaktionsmatrizen RM1, RM2,...,RMn, deren Datenstruktur in der Steuerung ST hinterlegt ist, schematisch dargestellt. Jede Reaktionsmatrix RM1, RM2,...,RMn ist jeweils einem Benutzer 1, 2,...,n eindeutig zugeordnet und benutzerindividuell konfigurierbar. In den in Zeilen und Spalten organisierten Feldern der Reaktionsmatrizen RM1,...,RMn sind jeweils Steuerinformationen zum Steuern des Multimediaservers MMS und der Vermittlungseinrichtung VE hinterlegt. Eine Reaktionsmatrix RM1,...,RMn erhält für eine Vielzahl von möglichen Multimediafähigkeiten von externen Endgeräten EGE jeweils eine eigene Zeile sowie für eine Vielzahl von möglichen Multimediafähigkeiten von internen Endgeräten EGI jeweils eine eigene Spalte. In FIG 2 des vorliegenden Ausführungsbeispiels sind aus Übersichtlichkeitsgründen lediglich die Zeilen und Spalten für nur sprachkommunikationsfähige Endgeräte ("Sprache") und sowohl sprach- als auch videokommunikationsfähige Endgeräte ("Sprache & Video") explizit dargestellt. In der Praxis können weitere Zeilen und/oder Spalten in den Reaktionsmatrizen RM1,...,RMn vorgesehen sein um z.B. auch Datendienste, Informationsdienste und/oder Steuerdienste bereitstellende Multimediaendgeräte zu berücksichtigen. Durch die in den Feldern der Reaktionsmatrizen RM1,...,RMn hinterlegten Steuerinformationen wird benutzerindividuell festgelegt, wie die Multimedia-Kommunikationseinrichtung MKE reagiert, wenn eine Verbindung zwischen Multimediaendgeräten mit unterschiedlichen Multimediafähigkeiten aufzubauen ist. Die Steuerinformationen betreffen dabei die für die jeweiligen Multimediaendgeräte relevanten Medienkanäle.

Im vorliegenden Ausführungsbeispiel werden beim Aufbau der Verbindung V zwischen dem internen Endgerät EGI und dem externen Endgerät EGE durch die Steuerung ST die Multimediafähigkeiten der an der Verbindung V beteiligten Endgeräte EGI und EGE und der Typ der von diesen jeweils angebotenen Multimediadienste, hier ein Sprachdienst beim Endgerät EGI und sowohl ein Sprach- als auch ein Videodienst beim Endgerät EGE, ermittelt. Weiterhin wird der momentane Benutzer des internen Endgerätes EGI, hier Benutzer 1, ermittelt. Gemäß der festgestellten Identität des Benutzers des internen Endgerätes EGI wird durch die Steuerung ST die dem Benutzer 1 zugeordnete Reaktionsmatrix RM1 selektiert.

Falls die zu verbindenden Endgeräte über die gleichen Multimediafähigkeiten verfügen, sind - wie in FIG 2 durch Auslassungsstriche in den Diagonalfeldern der Reaktionsmatrix RM1 angedeutet - keine über den Aufbau einer Verbindung hinausgehenden Maßnahmen vorgesehen. Falls dagegen, wie im vorliegenden Ausführungsbeispiel, von der Steuerung ST festgestellt wird, dass von einem der zu verbindenden Endgeräte, hier EGE, ein Multimediadienst angeboten wird, der von einem anderen Endgerät, hier EGI, nicht bedient wird, wird der Multimediaserver MMS angesteuert. Solche von einem Endgerät angebotenen und von einem mit diesem verbundenen weiteren Endgerät nicht bedienten Multimediakanäle werden im Folgenden auch als "offene Enden" bezeichnet. Im vorliegenden Ausführungsbeispiel bildet der vom Endgerät EGE angebotene vom Endgerät EGI aber nicht bediente Videokanal VK ein derartiges offenes Ende.

Zum Aufbau der Verbindung V werden durch die Steuerung ST die Endgeräte EGI und EGE zunächst durch den von beiden Endgeräten angebotenen Sprachkanal SK verbunden. Um weiterhin den offenen Videokanal VK des Endgerätes EGE spezifisch zu bedienen, wird durch die Steuerung ST aus der selektierten Reaktionsmatrix RM1 eine Steuerinformation aus demjenigen Feld ausgelesen, das zu den von den Endgeräten EGI und EGE jeweils angebotenen Multimediadiensten korrespondiert. Im vorliegenden Ausführungsbeispiel ist dies eine Steuerinformation zum Anzeigen eines Standbildes des Benutzers 1. Die ausgelesene Steuerinformation legt die weitere Reaktion der Multimedia-Kommunikationseinrichtung MKE fest.

Durch die ausgelesene Steuerinformation wird der Multimediaserver MMS dazu veranlaßt, ein Standbild des Benutzers 1 repräsentierende Videodaten aus der Datenbank DB abzurufen und zur Vermittlungseinrichtung VE zu übertragen. Die Vermittlungseinrichtung VE überträgt daraufhin die vom Multimediaserver MMS empfangenen Videodaten mit dem Standbild des Benutzers 1 innerhalb des der aufgebauten Verbindung V zugeordneten Videokanals VK zum Endgerät EGE. Damit sieht ein Benutzer des externen Endgerätes EGE während seiner Sprachkommunikation mit Benutzer 1 dessen Standbild.

Für jeden weiteren der Benutzer 1 bis n sind in der Datenbank DB ebenfalls Multimediadaten mit einem jeweiligen Standbild des betreffenden Benutzers zur Anzeige an videofähigen Endgeräten hinterlegt. Zusätzlich oder alternativ können in der Datenbank DB auch benutzerindividuelle Visitenkarten oder ein einheitliches oder nach einzelnen Abteilungen differenziertes Firmenlogo zur Anzeige an videofähigen Endgeräten von Kommunikationspartnern hinterlegt sein. Auf diese Weise kann internen Benutzern der Multimedia-Kommunikationseinrichtung MKE ein einheitliches Auftreten in Ton, Text und Bild im Rahmen ganz unterschiedlicher Multimediadienste und/oder eine einheitliche multimediafähige Oberfläche gegenüber externen Kommunikationspartnern verschafft werden. Im Prinzip sind die Reaktion auf offene Medienkanäle in den Reaktionsmatrizen RM1,...,RMn und die entsprechenden Multimediadaten in der Datenbank DB beliebig konfigurierbar. Die Erfindung erlaubt es somit, auf offene Medienkanäle individuell zu reagieren, anstatt - wie bisher üblich - eine Fehlermeldung auszugeben oder die offenen Medienkanäle ersatzlos zu terminieren.

In der Reaktionsmatrix RM1 ist ein weiterer Eintrag für Fälle vorgesehen, in denen das interne Endgerät EGI sowohl sprachals auch videofähig und das externe Endgerät EGE nur sprachfähig ist. Die entsprechende in der Reaktionsmatrix RM1 hinterlegte Steuerinformation veranlaßt in diesen Fällen in Ermangelung eines Videobildes des Benutzers des externen Endgerätes EGE den Namen und/oder die Rufnummer dieses Benutzers, soweit bekannt, als Bild am Endgerät EGI einzublenden.

Gemäß einer weiteren Ausführungsform der Erfindung können auch leistungsmerkmalspezifische, endgerätespezifische oder für vorgegebene Gruppen von Endgeräten spezifische Reaktionsmatrizen vorgesehen sein. So kann beispielsweise für unterschiedliche Leistungsmerkmale der Multimedia-Kommunikationseinrichtung MKE in der Steuerung ST jeweils eine eigene Reaktionsmatrix hinterlegt sein. Durch die darin enthaltenen, leistungsmerkmalspezifischen Steuerinformationen wird bei Auslösen eines betreffenden Leistungsmerkmals eine leistungsmerkmalspezifische Reaktion des Kommunikationssystems abhängig von den Multimediafähigkeiten der beteiligten Endgeräte veranlaßt. Auf diese Weise kann z.B. in einer Videokonferenzschaltung bei Auslösen des Leistungsmerkmals "do not disturb" durch einen Teilnehmer der

Videokonferenz ein Teil oder alle der einer Verbindung zu diesem Teilnehmer zugeordneten Multimediakanäle vom Multimediaserver MMS gespeist werden, um ein für dieses Leistungsmerkmal spezifisches Standbild bei den übrigen Konferenzteilnehmern anzuzeigen.

## Patentansprüche

1. Verfahren zur Kommunikation zwischen Endgeräten (EGE, EGI) mit unterschiedlichen Multimediafähigkeiten, bei dem
a) festgestellt wird, welche Multimediadienste von den jeweiligen Endgeräten (EGE, EGI) angeboten werden,
b) abhängig davon anhand einer jeweils für unterschiedliche Leistungsmerkmale vorgegebenen, leistungsmerkmalindividuell konfigurierbaren Reaktionsmatrix (RM1,RM2,...,RMn), in der differenziert sowohl nach potentiellen Multimediafähigkeiten eines anrufenden Endgerätes (EGE, EGI) als auch nach potentiellen Multimediafähigkeiten eines von diesem angerufenen Endgerätes (EGE, EGI) jeweils eine Steuerinformation hinterlegt ist, ein betreffendes Leistungsmerkmal gesteuert wird,
c) ein Multimediadienst ermittelt wird, der von einem Ersten (EGE) der Endgeräte angeboten wird und von einem Zweiten (EGI) der Endgeräte nicht angeboten wird,
d) abhängig von dem ermittelten Multimediadienst für diesen Multimediadienst spezifische Multimediadaten aus einer Vielzahl von vorgegebenen, gespeicherten Multimediadaten ausgewählt werden, und
e) die ausgewählten Multimediadaten über einen Medienkanal (VK), der einer Verbindung (V) zwischen erstem (EGE) und zweitem (EGI) Endgerät zugeordnet wird, zum ersten Endgerät (EGE) übertragen werden.

2. Verfahren nach Anspruch 1,
**dadurch gekennzeichnet,**
**daß** für mindestens eines der Endgeräte (EGE, EGI) ein jeweiliger Benutzer ermittelt wird, und
die Multimediadaten abhängig vom ermittelten Benutzer aus einer Vielzahl von gespeicherten, benutzerspezifischen Multimediadaten ausgewählt werden.

3. Verfahren nach Anspruch 1 oder 2,
**dadurch gekennzeichnet,**
**daß** die Multimediadaten abhängig von einem an mindestens einem der Endgeräte (EGE, EGI) aktivierten Leistungsmerkmal aus einer Vielzahl von gespeicherten, leistungsmerkmalspezifischen Multimediadaten ausgewählt werden.

4. Verfahren nach einem der vorhergehenden Ansprüche,
**dadurch gekennzeichnet,**
**daß** die Identität mindestens eines der Endgeräte (EGE, EGI) ermittelt wird, und
die Multimediadaten abhängig von der ermittelten Identität des Endgerätes (EGE, EGI) aus einer Vielzahl von gespeicherten, endgerätespezifischen Multimediadaten ausgewählt werden.

5. Verfahren nach einem der vorhergehenden Ansprüche,
**dadurch gekennzeichnet,**
**daß** eine Gruppenzugehörigkeit mindestens eines der Endgeräte (EGE, EGI) ermittelt wird, und
die Multimediadaten abhängig von der ermittelten Gruppenzugehörigkeit des Endgerätes (EGE, EGI) aus einer Vielzahl von gespeicherten, gruppenspezifischen Multimediadaten ausgewählt werden.

6. Multimedia-Kommunikationseinrichtung (MKE) zur Kommunikation zwischen Endgeräten (EGE, EGI) mit unterschiedlichen Multimediafähigkeiten, mit
a) einer Erfassungseinrichtung (ST) zum Ermitteln eines Multimediadienstes, der von einem Ersten (EGE) der Endgeräte angeboten wird und von einem Zweiten (EGI) der Endgeräte nicht angeboten wird,
b) einer jeweils für unterschiedliche Leistungsmerkmale vorgegebenen, leistungsmerkmalindividuell konfigurierbaren Reaktionsmatrix (RM1,RM2,...,RMn), in der differenziert sowohl nach potentiellen Multimediafähigkeiten eines anrufenden Endgerätes (EGE, EGI) als auch nach potentiellen Multimediafähigkeiten eines von diesem angerufenen Endgerätes (EGE, EGI) jeweils eine Steuerinformation zum Steuern eines betreffenden Leistungsmerkmals hinterlegt ist,
c) Speichermitteln (DB) zum Speichern von vorgegebenen Multimediadaten,
d) einer Servereinrichtung (MMS) zum Abfragen von für den ermittelten Multimediadienst spezifischen Multimediadaten aus den Speichermitteln (DB) und zum Ausgeben dieser Multimediadaten,
e) einer Vermittlungseinrichtung (VE) zum Übertragen der ausgegebenen Multimediadaten über einen multimediadienstspezifischen Medienkanal (VK) zum ersten Endgerät (EGE) und zum Zuordnen des Medienkanals (VK) zu einer Verbindung (V) zwischen erstem (EGE) und zweitem (EGI) Endgerät.

7. Multimedia-Kommunikationseinrichtung gemäß Anspruch 6,
**gekennzeichnet durch**
eine je Benutzer vorgegebene, benutzerindividuell konfigurierbare Reaktionsmatrix (RM1,RM2,...,RMn), in der differenziert sowohl nach potentiellen Multimediafähigkeiten eines vom betreffenden Benutzer zu benutzenden Endgerätes (EGI) als auch nach potentiellen Multimediafähigkeiten eines mit diesem zu verbindenden, weiteren Endgerätes (EGE) jeweils eine Steuerinformation zum Steuern der Servereinrichtung (MMS) hinterlegt ist.

## Claims

1. Method for communication between terminals (EGE, EGI) having different multimedia capabilities, in which
a) it is ascertained what multimedia services are offered by the respective terminals (EGE, EGI),
b) depending on this, using a performance-feature-individually configurable reaction matrix (RM1, RM2, ..., RMn) which is predetermined in each case for different performance features and in which a respective item of control information is stored in a differentiated manner both according to potential multimedia capabilities of a calling terminal (EGE, EGI) and according to potential multimedia capabilities of a terminal (EGE, EGI) called by the former terminal, a relevant performance feature is controlled,
c) a multimedia service is determined which is offered by a first (EGE) of the terminals and is not offered by a second (EGI) of the terminals,
d) depending on the multimedia service determined, multimedia data specific to this multimedia service are selected from a multiplicity of predetermined, stored multimedia data, and
e) the selected multimedia data are transmitted to the first terminal (EGE) via a media channel (VK), which is assigned to a connection (V) between first (EGE) and second (EGI) terminal.

2. Method according to Claim 1,
**characterized**
**in that** a respective user is determined for at least one of the terminals (EGE, EGI), and
the multimedia data are selected from a multiplicity of stored, user-specific multimedia data in a manner dependent on the user determined.

3. Method according to Claim 1 or 2,
**characterized**
**in that** the multimedia data are selected from a
multiplicity of stored, performance-feature-specific multimedia data in a manner dependent on a performance feature activated at at least one of the terminals (EGE, EGI).

4. Method according to one of the preceding claims,
**characterized**
**in that** the identity of at least one of the terminals (EGE, EGI) is determined, and
the multimedia data are selected from a multiplicity of stored, terminal-specific multimedia data in a manner dependent on the determined identity of the terminal (EGE, EGI).

5. Method according to one of the preceding claims,
**characterized**
**in that** a group association of at least one of the terminals (EGE, EGI) is determined, and
the multimedia data are selected from a multiplicity of stored, group-specific multimedia data in a manner dependent on the determined group association of the terminal (EGE, EGI).

6. Multimedia communication device (MKE) for communication between terminals (EGE, EGI) having different multimedia capabilities, having
a) an acquisition device (ST) for determining a multimedia service which is offered by a first (EGE) of the terminals and is not offered by a second (EGI) of the terminals,
b) a performance-feature-individually configurable reaction matrix (RM1, RM2, ..., RMn) which is predetermined in each case for different performance features and in which a respective item of control information for controlling a relevant performance feature is stored in a differentiated manner both according to potential multimedia capabilities of a calling terminal (EGE, EGI) and according to potential multimedia capabilities of a terminal (EGE, EGI) called by the former terminal,
c) storage means (DB) for storing predetermined multimedia data,
d) a server device (MMS) for interrogating multimedia data from the storage means (DB), said multimedia data being specific to the multimedia service determined, and for outputting said multimedia data,
e) a switching device (VE) for transmitting the output multimedia data via a multimedia-service-specific media channel (VK) to the first terminal (EGE) and for assigning the media channel (VK) to a connection (V) between first (EGE) and second (EGI) terminal.

7. Multimedia communication device according to Claim 6,
**characterized by**
a user-individually configurable reaction matrix (RM1, RM2, ..., RMn) which is predetermined for each user and in which a respective item of control information for controlling the server device (MMS) is stored in a differentiated manner both according to potential multimedia capabilities of a terminal (EGI) to be used by the relevant user and according to potential multimedia capabilities of a further terminal (EGE) to be connected to the former terminal.

## Revendications

1. Procédé pour la communication entre des terminaux (EGE, EGI) ayant différentes aptitudes multimédia, dans lequel
a) il est constaté quels services multimédia sont proposés par les terminaux respectifs (EGE, EGI),
b) indépendamment de cela, un service concerné est commandé à l'aide d'une matrice de réaction (RM1, RM2, ..., RMn) prédéfinie pour différents services et configurable individuellement en fonction du service, dans laquelle une information de commande est respectivement mémorisée de manière différenciée aussi bien selon des aptitudes multimédia potentielles d'un terminal appelant (EGE, EGI) que selon des aptitudes multimédia potentielles d'un terminal (EGE, EGI) appelé par celui-ci,
c) un service multimédia est déterminé, qui est proposé par un premier terminal (EGE) des terminaux et n'est pas proposé par un deuxième terminal (EGI) des terminaux,
d) en fonction du service multimédia déterminé, des données multimédia spécifiques à ce service multimédia sont sélectionnées à partir d'une pluralité de données multimédia prédéfinies mémorisées et
e) les données multimédia sélectionnées sont transmises au premier terminal (EGE) par l'intermédiaire d'un canal média (VK) auquel est affectée une liaison (V) entre le premier terminal (EGE) et le deuxième terminal (EGI).

2. Procédé selon la revendication 1,
**caractérisé en ce**
**qu'**un utilisateur respectif est déterminé pour au moins l'un des terminaux (EGE, EGI) et en ce que les données multimédia, en fonction de l'utilisateur déterminé, sont sélectionnées à partir d'une pluralité de données multimédia mémorisées, spécifiques à l'utilisateur.

3. Procédé selon la revendication 1 ou 2,
**caractérisé en ce**
**que** les données multimédia, en fonction d'un service activé sur au moins l'un des terminaux (EGE, EGI), sont sélectionnées à partir d'une pluralité de données multimédia mémorisées, spécifiques au service.

4. Procédé selon l'une quelconque des revendications précédentes,
**caractérisé en ce**
**que** l'identité d'au moins l'un des terminaux (EGE, EGI) est déterminée, et
en ce que les données multimédia, en fonction de l'identité déterminée du terminal (EGE, EGI), sont sélectionnées à partir d'une pluralité de données multimédia mémorisées, spécifiques au terminal.

5. Procédé selon l'une quelconque des revendications précédentes,
**caractérisé en ce**
**qu'**une appartenance à un groupe d'au moins l'un des terminaux (EGE, EGI) est déterminée, et en ce que les données multimédia, en fonction de l'appartenance au groupe déterminée du terminal (EGE, EGI), sont sélectionnées à partir d'une pluralité de données multimédia mémorisées, spécifiques au groupe.

6. Dispositif de communication multimédia (MKE) pour la communication entre des terminaux (EGE, EGI) ayant différentes aptitudes multimédia, comprenant
a) un dispositif de détection (ST) pour déterminer un service multimédia qui est proposé par un premier terminal (EGE) des terminaux et qui n'est pas proposé par un deuxième terminal (EGI) des terminaux,
b) une matrice de réaction (RM1, RM2, ..., RMn) prédéfinie pour différents services et configurable individuellement en fonction du service, dans laquelle une information de commande est respectivement mémorisée pour commander un service concerné, de manière différenciée aussi bien selon des aptitudes multimédia potentielles d'un terminal appelant (EGE, EGI) que selon des aptitudes multimédia potentielles d'un terminal (EGE, EGI) appelé par celui-ci,
c) des moyens de mémorisation (DB) pour mémoriser des données multimédia prédéfinies,
d) un dispositif serveur (MMS) pour interroger des données multimédia, spécifiques au service multimédia déterminé, à partir des moyens de mémorisation (DB) et pour sortir ces données multimédia,
e) un dispositif de commutation (VE) pour transmettre au premier terminal (EGE) les données multimédia sorties par l'intermédiaire d'un canal média (VK) spécifique au service multimédia et pour affecter le canal média (VK) à une liaison (V) entre le premier terminal (EGE) et le deuxième terminal (EGI).

7. Dispositif de communication multimédia selon la revendication 6,
**caractérisé par**
respectivement une matrice de réaction (RM1, RM2, ...,RMn) prédéfinie pour chaque utilisateur et configurable individuellement selon l'utilisateur, dans laquelle une information de commande est respectivement mémorisée pour commander le dispositif serveur (MMS), de manière différenciée, aussi bien selon des aptitudes multimédia potentielles d'un terminal (EGI) à utiliser par l'utilisateur concerné que selon des aptitudes multimédia potentielles d'un autre terminal (EGE) à connecter à celui-ci.
